Europäisches Patentamt

European Patent Office

Office européen des brevets

(11) Veröffentlichungsnummer : **0 077 985**
**B1**

(12) **EUROPÄISCHE PATENTSCHRIFT**

(45) Veröffentlichungstag der Patentschrift :
27.07.88

(21) Anmeldenummer : 82109540.3

(22) Anmeldetag : 15.10.82

(51) Int. Cl.⁴ : **G 01 C 21/12**

(54) **Koppelnavigationsverfahren zur Bestimmung der Sollposition eines Fahrzeugs.**

(30) Priorität : 22.10.81 DE 3141871

(43) Veröffentlichungstag der Anmeldung :
04.05.83 Patentblatt 83/18

(45) Bekanntmachung des Hinweises auf die Patenterteilung : 27.07.88 Patentblatt 88/30

(84) Benannte Vertragsstaaten :
FR GB SE

(56) Entgegenhaltungen :
DE-A- 2 136 589
GB-A- 2 014 309

(73) Patentinhaber : TELDIX GmbH
Grenzhöfer Weg 36 Postfach 105608
D-6900 Heidelberg 1 (DE)

(72) Erfinder : Gielen, Harald, Dipl.-Ing.
Eckertswiesen 57
D-6909 Rauenberg (DE)

(74) Vertreter : Kammer, Arno, Dipl.-Ing.
TELDIX GmbH Postfach 10 56 08 Grenzhöfer Weg 36
D-6900 Heidelberg 1 (DE)

# 0 077 985

## Beschreibung

Die Erfindung betrifft ein Koppelnavigationsverfahren zur Bestimmung der Sollposition eines Fahrzeugs, gemäß dem Oberbegriff des ersten Patentanspruchs.

Aus der DE-A-28 05 628 ist ein Verfahren bekannt, bei welchem mit einer Koppelnavigationsrechnung aus den Richtungssignalen eines Kurskreisels und den Wegsignalen eines Weggebers die Position eines Fahrzeugs berechnet wird. Diese Position ist jedoch durch die unbekannte Drift des Kurskreisels verfälscht. Weiterhin wird in einer zusätzlichen Koppelrechnung eine mit einer bestimmten vorgegebenen Drift bzw. Pseudodrift behaftete Fahrzeugposition bestimmt.

Um nun die unbekannte Drift des Kurskreisels zu ermitteln und somit bei der weiteren Bestimmung der tatsächlichen Position des Fahrzeugs diese möglichst genau zu bestimmen, ist es erforderlich, eine bekannte Position anzufahren und aus dem Verhältnis der Abstände der angezeigten Positionen und der tatsächlichen Position des Fahrzeugs und den Richtungswinkeln dieser Positionen zur Nordrichtung die Korrekturrechnung durchzuführen.

Dieses Verfahren ist jedoch nur dann möglich, wenn Kenntnisse über den ungefähren Standort und insbesondere die Koordinaten bestimmter Bezugspunkte vorhanden sind.

Im unbekannten Gelände oder beispielsweise bei schlechten Sichtverhältnissen, die ein Auffinden eines Bezugspunktes verhindern, kann eine Driftbestimmung und damit eine Positionskorrektur nicht durchgeführt werden.

Aufgabe der Erfindung ist es, ein einfaches Verfahren zur genauen Positionsbestimmung anzugeben, bei welchem keine Kenntnisse über das befahrene Gelände benötigt werden.

Diese Aufgabe wird bei einem Verfahren des eingangs genannten Art durch die im Kennzeichen des ersten Patentanspruchs angegebenen Merkmale gelöst.

Die Nordrichtung kann beispielsweise aus den Signalen eines sogenannten nordsuchenden Kreisels, wie er im besonderen bei Navigationsanlagen verwendet wird, gewonnen werden. Die hiermit erreichte Nordgenauigkeit ist ein wesentliches Merkmal dieses Kreisels und erlaubt ein sehr genaues Navigieren des Fahrzeugs. Für Zwecke, bei denen eine geringe Genauigkeit ausreicht, kann zur Nordrichtungsbestimmung eine Erdfeldmeßsonde angewendet werden. Diese wird häufig in Verbindung mit einem Wegzähler zur Positionsbestimmung von Straßenfahrzeugen, wie z. B. Rettungswagen angewendet.

Da das Signal z. B. der Erdfeldmeßsonde nicht ständig zur Verfügung steht, sondern durch Störfelder zeitweise beeinflußt wird, ist ein Lenkwinkelgeber vorgesehen, der während den Störzeiten ein Richtungssignal liefert. Dieses Richtungssignal ist jedoch wie bei einem Kurskreisel mit einer Drift behaftet. Insbesondere bei einer Kurvenfahrt entsteht ein erheblicher Driftfehler, der die Positionsanzeige verfälscht. Diese Drift wird in einer Ausgestaltung der Erfindung nach der Beziehung

$$DN = \frac{\alpha_N}{S_N} \; [o/m]$$

ermittelt.

Hierbei ist $\alpha_N$ der nach der Störung gemessene Differenzwinkel zwischen dem zu Beginn und dem zu Ende der Messung festgestellten Nordrichtungswinkel des Fahrzeugs, wobei natürlich eine Kursänderung des Fahrzeugs nicht in diesem Winkel enthalten ist. Dieser Winkel wird dividiert durch die während der Messungen zurückgelegten Strecke $S_N$.

Bei der Driftbestimmung eines Kurskreisels wird als Divisionsfaktor die Zeit zwischen den beiden letzten Messungen eingesetzt, da die Drift des Kurskreisels eine Funktion der Zeit und unabhängig vom zurückgelegten Weg ist.

Dieses Verfahren ist im wesentlichen für kleinere Differenzwinkel bzw. Driften geeignet. Größere Abweichungen sind jedoch schon aufgrund der hohen Genauigkeitsforderungen an Navigationsanlagen nicht üblich. Es ist hinlänglich bekannt, den von der Erddrehung und von der geographischen Breite abhängigen Anteil der Drift eines Kurskreisels mit einfachen Mitteln zu kompensieren. Hierdurch ist es lediglich interessant, die unbestimmbaren Anteile der Drift zu ermitteln und dadurch die Positionsanzeige zu verbessern. Jedoch läßt sich dieses Verfahren auch zur Kompensation der gesamten Kreiseldrift anwenden.

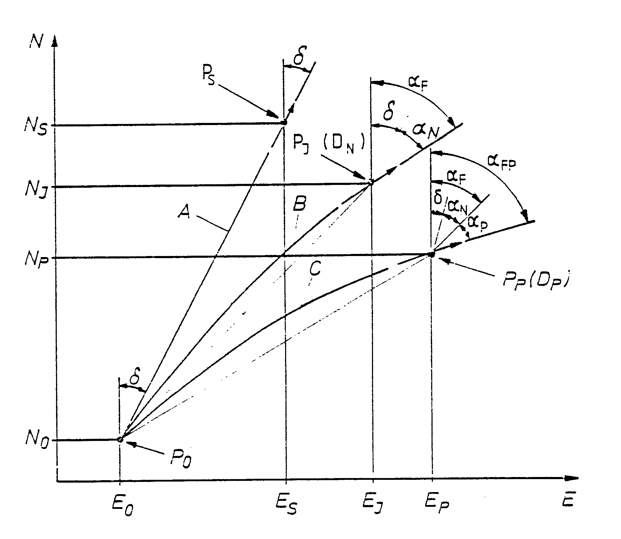

Die Erfindung wird nachfolgend unter Bezugnahme auf die Zeichnung näher erläutert. Es wird zunächst davon ausgegangen, daß das Fahrzeug zu Beginn an einer bekannten Position $P_0$ steht und auch der Kurswinkel des Fahrzeugs bekannt ist. Die Koordinaten $N_0$, $E_0$ dieser Position sowie der Kurswinkel $\delta$ sind in bekannter Weise in den Navigationsrechner eingegeben. Beginnt nun das Fahrzeug seine Fahrt durch das Gelände, so wird in gewohnter Weise die Koppelrechnung durchgeführt, durch welche die zurückgelegten Wegstrecken und Kursänderungen ständig ausgewertet werden und die Koordinaten des jeweiligen Standorts, allerdings durch einen Driftfehler verfälscht, bestimmt werden. Der jeweilige Standort kann zum Beispiel in einem Kartengerät angezeigt werden.

Die Strecke A zwischen den Punkten $P_0$-$P_S$ stellt die tatsächliche Fahrstrecke des Fahrzeugs dar. Zur einfacheren Darstellung wurde eine gerade Strecke gewählt, selbstverständlich ist jedoch jede

2

beliebige Streckenführung möglich. Die Standortanzeige in einem Kartengerät beschreibt jedoch die Strecke B zwischen den Punkten $P_O$-$P_J$, da durch die unbekannte Drift des Kurskreisels der angezeigte Kurs eine Richtungsabweichung erfährt. Diese Abweichung wird über der Zeit integriert und erfordert in bestimmten Abständen eine Korrektur der angezeigten Positionskoordinaten. Zusätzlich zu dem Berechnen der Fahrzeugposition aus der driftbehafteten Kursanzeige des Kurskreisels wird ständig eine weitere Fahrzeugposition ermittelt, welche der Strecke C zwischen den Punkten $P_O$-$P_p$ entspricht. Diese Strecke erhält man durch eine Kursberechnung mit einer sogenannten Pseudodrift, die sich zur unbekannten Kreiseldrift aufsummiert. Nach einer Fahrtzeit $T/Nt_N$, die beliebig gewählt werden kann oder automatisch anhand verschiedener Kriterien bestimmt wird, und nach der das Fahrzeug bei dem Punkt $P_S$ angelangt ist, wird der Kurswinkel neu ermittelt. Dies geschieht durch einen Nordsuchvorgang mittels eines Kreiselkompasses oder einer Erdfeldmeßsonde. Der hierbei ermittelte Kurswinkel entspricht in dem Ausführungsbeispiel durch den geraden Streckenverlauf A dem Ausgangskurswinkel. Die Standort- bzw. Positionsanzeige zeigt jedoch eine Position $P_J$ an, die durch die Kreiseldrift verfälscht ist und einen Kurswinkel $\delta + \alpha_N$ beinhaltet.

Aus der Berechnung der Positionen mit einer Pseudodrift erhält man eine dritte Standortanzeige $P_P$. Die unbekannte Drift $D_N$ des Kurskreisels wird nun in einer ersten Berechnung nach der Beziehung

$$D_N = \alpha_N/t_N \tag{1}$$

bestimmt.

Die Koordinatenwerte für den tatsächlichen Standort des Fahrzeugs erhält man wie folgt:

$$\frac{E_P - E_J}{E_J - E_S} = \frac{D_P}{D_N} ; \tag{2}$$

nach Umformung ergibt sich der Ostwert des gesuchten Koordinatenwerts zu

$$E_S = E_J - (E_P - E_J)\frac{D_N}{D_P} ; \tag{3}$$

in gleicher Weise errechnet sich der Nordwert zu

$$N_S = N_J - (N_P - N_J)\frac{D_N}{D_P} . \tag{4}$$

Das Verhalten der Driften läßt sich natürlich auch unter Verwendung der Formel (1) als Verhältnis der Driftwinkel $\alpha_N$, $\alpha_P$ darstellen, wobei der Winkel $\alpha_N$ nach der Beziehung

$$\alpha_N = \alpha_F - \delta$$

und der Winkel $\alpha_P$ nach der Beziehung

$$\alpha_P = \alpha_{FP} - \alpha_F$$

zu ermitteln ist. Hierin ist $\alpha_F$ der Winkel, der als Fahrzeugrichtung in Bezug auf die Nordrichtung angezeigt wird und $\alpha_{FP}$ der Winkel zwischen der Nordrichtung und der durch die Pseudodrift verfälschte Fahrzeugrichtung. Der Winkel $\delta$ ist der Kurswinkel, d. h., der tatsächliche Winkel zwischen Fahrzeugrichtung und Nordrichtung. Durch Einsetzen der Winkelbeziehungen in die Gleichungen (3) und (4) lassen sich die Koordinatenwerte $E_S$, $N_S$ nach den Beziehungen

$$E_S = E_J - (E_P - E_J)\frac{\alpha_F - \delta}{\alpha_{FP} - \alpha_F}$$

$$N_S = N_J - (N_P - N_J)\frac{\alpha_F - \delta}{\alpha_{FP} - \alpha_F}$$

ermitteln.

Anhand dieser Werte erfolgt eine Korrektur der angezeigten Werte oder der Positionsanzeige auf dem Kartengerät. Für die weitere Fahrstrecke kann nun zur Positionsbestimmung die hierbei ermittelte Drift $D_N$ zugrunde gelegt werden, wobei nach einer weiteren Fahrzeit nach dem gleichen Verfahren eine neue Positionskorrektur durchgeführt wird. Anhand dieses Verfahrens ist es somit möglich, das Driftverhalten des Kurskreisel zu überwachen und die Positionsanzeige ständig zu verbessern.

**Patentansprüche**

1. Koppelnavigationsverfahren zur Bestimmung der Sollposition eines Fahrzeugs nach Zurücklegen einer beliebigen Fahrstrecke, bei dem eine Koppelrechnung mit einer durch ein Kursreferenzgerät verursachten unbekannten Drift $D_N$ und wenigstens einer weiteren beliebig gewählten Pseudodrift $D_P$ durchgeführt wird und bei dem die Abstände der dadurch erhaltenen Positionen ausgewertet werden, wobei zur Ermittlung der Kursrichtung des Kursreferenzgeräts die Nordrichtung am Anfang der Fahrstrecke bestimmt wird, dadurch gekennzeichnet, daß zusätzlich die Kursrichtung des Kursreferenzgeräts durch Ermittlung der Nordrichtung am Ende der Fahrstrecke bestimmt wird, daß die Koordinatenwerte der Sollposition $E_S$, $N_S$ nach den Beziehungen

$$E_S = E_J - (E_P - E_J) \cdot D_N/D_P$$

$$N_S = N_J - (N_P - N_J) \cdot D_N/D_P$$

gebildet werden, wobei $E_J$, $N_J$ die durch die Drift $D_N$ des Kursreferenzgeräts erhaltenen Koordinatenwerte und $E_P$, $N_P$ die durch die Pseudodrift $D_P$ erhaltenen Koordinatenwerte darstellen und daß die unbekannte Drift $D_N$ aus dem Unterschied $\alpha_N$ der Ausrichtungen des Kursreferenzgeräts am Anfang und am Ende der zurückgelegten Fahrstrecke, was dem Kurswinkelfehler entspricht, ermittelt wird.

2. Koppelnavigationsverfahren nach Anspruch 1, dadurch gekennzeichnet, daß die Drift $D_N$ nach der Beziehung

$$D_N = \alpha_N/t_N$$

ermittelt wird, wobei $t_N$ die Fahrzeit für das Zurücklegen der Fahrstrecke ist.

3. Koppelnavigationsverfahren nach Anspruch 1, dadurch gekennzeichnet, daß die Drift $D_N$ nach der Beziehung

$$D_N = \alpha_N/S_K$$

ermittelt wird, wobei $S_K$ die Länge der Fahrstrecke ist.

4. Koppelnavigationsverfahren nach Anspruch 1, dadurch gekennzeichnet, daß das Verhältnis der Driften $D_N/D_P$ aus den ermittelten Richtungswinkeln nach der Beziehung

$$D_N/D_P = (\alpha_F - \delta)/(\alpha_{FP} - \alpha_F)$$

gebildet wird, wobei $\alpha_F$ der Winkel zwischen angezeigter Fahrzeugrichtung und Nordrichtung am Ende der Fahrstrecke, $\delta$ der tatsächliche Winkel zwischen Fahrzeugrichtung und Nordrichtung am Anfang der Fahrstrecke und $\alpha_{FP}$ der Winkel zwischen der durch die Pseudodrift verfälschten Fahrzeugrichtung und der Nordrichtung am Ende der Fahrstrecke darstellt.

5. Koppelnavigationsverfahren nach einem der vorherigen Ansprüche, dadurch gekennzeichnet, daß die Nordrichtung mittels eines Kreiselkompasses bestimmt wird.

6. Koppelnavigationsverfahren nach einem der Ansprüche 1 bis 5, dadurch gekennzeichnet, daß die Nordrichtung mittels einer Erdfeldmeßsonde ermittelt wird.

**Claims**

1. A dead reckoning navigation method for determining the desired position of a vehicle after a desired journey has been travelled, in which a dead reckoning is implemented with a drift $D_N$, which is unknown and caused by a course reference device, and at least one other freely chosen pseudo drift $D_P$ and in which the spacings of the positions thus obtained are evaluated, in which, in order to determine the course direction of the course reference device, the north direction is determined at the beginning of the journey, characterised in that in addition the course direction of the course reference device is determined by determining the north direction at the end of the journey, that the co-ordinate values of the desired position $E_S$, $N_S$ are formed according to the relationships :

$$E_S = E_J - (E_P - E_J) \cdot D_N/D_P$$

$$N_S = N_J - (N_P - N_J) \cdot D_N/D_P$$

in which $E_J$, $N_J$ represent the co-ordinate values obtained by the drift $D_N$ of the course reference device and $E_P$, $N_P$ represent the co-ordinate values obtained by the pseudo drift $D_P$ and that the unknown drift $D_N$ is determined from the difference $\alpha_N$ in the alignments of the course reference device at the beginning and at the end of the journey travelled, which corresponds to the course angle error.

2. A dead reckoning navigation method according to claim 1, characterised in that the drift $D_N$ is determined according to the relationship :

$$D_N = \alpha_N/t_N$$

in which $t_N$ is the travelling time for covering the journey.

3. A dead reckoning navigation method according to claim 1, characterised in that the drift $D_N$ is determined according to the relationship :

$$D_N = \alpha_N/S_K$$

in which $S_K$ is the length of the journey.

4. A dead reckoning navigation method according to claim 1, characterised in that the ratio of the drifts $D_N/D_P$ is formed from the direction angles determined according to the relationship :

$$D_N/D_P = (\alpha_F - \delta)/(\alpha_{FP} - \alpha_F)$$

in which $\alpha_F$ is the angle between the indicated vehicle direction and the north direction at the end of the journey, $\delta$ is the actual angle between the vehicle direction and the north direction at the beginning of the journey and $\alpha_{FP}$ is the angle between the vehicle direction which is made inaccurate by the pseudo drift and the north direction at the end of the journey.

5. A dead reckoning navigation method according to any one of the preceding claims, characterised in that the north direction is determined by means of a gyrocompass.

6. A dead reckoning navigation method according to any one of claims 1 to 5, characterised in that the north direction is ascertained by means of an earth's field measuring probe.

**Revendications**

1. Procédé de navigation à l'estime pour une détermination de la position de consigne d'un véhicule après le parcours d'une distance quelconque, selon lequel un calcul à l'estime est effectué avec une dérive inconnue $D_N$, provoquée par un appareil de référence de trajectoire, et au moins une autre pseudo-dérive $D_P$ choisie à volonté et selon lequel les éloignements des positions ainsi obtenues sont déterminés, auquel cas, pour la détermination de la direction de trajectoire de l'appareil de référence de trajectoire, la direction Nord est déterminée au début du parcours, caractérisé en ce qu'additionnellement la direction de trajectoire de l'appareil de référence de trajectoire est déterminée par définition de la direction Nord à la fin du parcours, en ce que les valeurs de coordonnées de la position de consigne $E_S$, $N_S$ sont déterminées d'après les relations :

$$E_S = E_J - (E_P - E_J) \cdot D_N/D_P$$

$$N_S = N_J - (N_P - N_J) \cdot D_N/D_P$$

où $E_J$, $N_J$ désignent les valeurs de coordonnées obtenues par la dérive $D_N$ de l'appareil de référence de trajectoire, tandis que $E_P$, $N_P$ désignent les valeurs de coordonnées obtenues par la pseudo-dérive $D_P$, et en ce que la dérive inconnue $D_N$ est obtenue à partir de la différence $\alpha_N$ entre les directions de l'appareil de référence de trajectoire au début et à la fin de la distance parcourue (erreur d'angle de trajectoire).

2. Procédé de navigation à l'estime selon la revendication 1, caractérisé en ce que la dérive $D_N$ est déterminée d'après la relation :

$$D_N = \alpha_N/t_N,$$

où $t_N$ désigne le temps mis pour parcourir la distance de déplacement.

3. Procédé de navigation à l'estime selon la revendication 1, caractérisé en ce que la dérive $D_N$ est déterminée d'après la relation :

$$D_N = \alpha_N/S_K$$

où $S_K$ désigne la longueur du parcours.

4. Procédé de navigation à l'estime selon la revendication 1, caractérisé en ce que le rapport entre les dérives $D_N/D_P$ est déterminé à partir des angles de direction obtenus conformément à la relation :

$$D_N/D_P = (\alpha_F - \alpha)/(\alpha_{FP} - \alpha_F)$$

où $\alpha_F$ désigne l'angle formé entre la direction de véhicule affichée et la direction Nord à la fin du parcours, $\alpha$ désigne l'angle réel entre la direction du véhicule et la direction Nord au début du parcours

et $\alpha_{FP}$ désigne l'angle entre la direction de véhicule falsifiée par la pseudo-dérive et la direction Nord à la fin du parcours.

5. Procédé de navigation à l'estime selon une des revendications précédentes, caractérisé en ce que la direction Nord est déterminée au moyen d'un compas gyroscopique.

6. Procédé de navigation à l'estime selon une des revendications 1 à 5, caractérisé en ce que la direction Nord est déterminée au moyen d'une sonde de mesure de champ terrestre.